Europäisches Patentamt

European Patent Office

Office européen des brevets

(11) Veröffentlichungsnummer: **0 279 940**

**A1**

# EUROPÄISCHE PATENTANMELDUNG

(21) Anmeldenummer: 87118680.5

(51) Int. Cl.4: **B60T 8/48**

(22) Anmeldetag: 16.12.87

(30) Priorität: 31.01.87 DE 3702906

(43) Veröffentlichungstag der Anmeldung:
31.08.88 Patentblatt 88/35

(84) Benannte Vertragsstaaten:
AT CH DE FR GB IT LI NL SE

(71) Anmelder: ROBERT BOSCH GMBH
Postfach 50
D-7000 Stuttgart 1(DE)

(72) Erfinder: Friedow, Michael
Uracher Weg 9
D-7146 Tamm(DE)

(54) **Hydraulisches Bremssystem.**

(57) Es wird ein hydraulisches Bremssystem mit einem zwischen Hauptbremszylinder (HBZ) und Radbremszylinder (RBZ) angeordneten, zur Bremsdruckmodulation dienenden Hydraulikzylinder (3) vorgeschlagen, dessen Kolben (4) von einem elektromotorisch angetriebenen Fliehkraftsteller (9) mechanisch betätigt wird. Der Hydraulikzylinder (3) kann in einem Antiblockiersystem in Verbindung mit dem Fliehkraftsteller (9) zur schnellen Bremsdruckreduzierung Verwendung finden. Es besteht auch die Möglichkeit, den Hydraulikzylinder mit Fliehkraftsteller so auszubilden, daß eine Bremskraftverstärkung oder Antriebsschlupfregelung bei Betätigung des Fliehkraftstellers erfolgt. Durch die Verwendung eines Fliehkraftstellers kann der Kolben schnell und sehr präzise zur Bremsdruckerhöhung oder Bremsdruckreduzierung verschoben werden.

FIG. 1

EP 0 279 940 A1

# Hydraulisches Bremssystem

## Stand der Technik

Die Erfindung betrifft ein hydraulisches Bremssystem gemäß der Gattung des Hauptanspruchs.

Hydraulische Bremssysteme, wie sie bei Kraftfahrzeugen Verwendung finden, besitzen einen Hauptbremszylinder, der mechanisch von einem Bremspedal betätigt wird, wodurch in den zu den Radbremszylindern führenden Bremsleitungen ein entsprechender Bremsdruck aufgebaut wird. Um ein Blockieren der Räder zu verhindern, sind sogenannte Antiblockiersysteme bekannt, bei denen der Bremsdruck reduziert wird, sobald ein Blockieren festgestellt wird oder zumindest unmittelbar bevorsteht. Zu diesem Zweck kann ein zwischen Hauptbremszylinder und Radbremszylinder angeordneter Hydraulikzylinder vorgesehen sein, dessen Kolben durch mechanische Betätigung eine Bremsdruckabsenkung bzw. eine Bremsdruckmodulation bewirkt. Der zusätzliche Hydraulikzylinder kann auch so angeordnet sein, daß eine Bremsdruckerhöhung bei dessen mechanischer Betätigung erzielt wird. Der Hydraulikzylinder arbeitet dann als Bremskraftverstärker. Ein fahrerunabhängiger Bremsdruckaufbau an angetriebenen Rädern bietet die Möglichkeit einer Antriebsschlupfregelung.

Aus dem US-Patent 4 083 609 ist ein Hydraulikzylinder bekannt, dessen Kolben über seine Kolbenstange von einem als Elektromagneten ausgebildeten Stellmechanismus verschiebbar ist. Die Verwendung eines Elektromagneten als Stellmechanismus hat jedoch den Nachteil, daß dieses System verhältnismäßig träge und für größere Kolbenauslenkungen nicht geeignet ist und die den Drücken entsprechenden hohen Kräfte nicht aufbringen kann.

## Vorteile der Erfindung

Das hydraulische Bremssystem mit den Merkmalen des Hauptanspruchs hat demgegenüber den Vorteil, daß der von einem Elektromotor angetriebene Fliehkraftsteller schnell beschleunigt werden kann und hohe Zug-oder Druckkräfte ermöglicht. Außerdem können die Zug-oder Druckkräfte sehr fein durch entsprechende Drehzahlregelung dosiert werden.

Der im Hydraulikzylinder angeordnete Kolben kann schwimmend gelagert sein, wobei der Kolben einerseits mit dem Hauptbremszylinder in Verbindung steht, während er andererseits an einen oder mehrere Radbremszylinder angeschlossen ist. Wird nun der Hauptbremszylinder betätigt, so verschiebt sich der Kolben innerhalb des Zylinders aus seiner Ruhestellung, wodurch der Druck in dem zu den Radbremszylindern führenden Bremsleitungen erhöht wird. Tritt eine Blockierneigung oder ein Blockieren der Räder auf, so kann dies von einem elektronischen Antiblockiersystem festgestellt und der dem Fliehkraftsteller zugeordnete Elektromotor in Gang gesetzt werden. Mit den vom Fliehkraftsteller abgeleiteten Zug-oder Druckkräfte wird dadurch der schwimmend gelagerte Kolben wenigstens geringfügig in Richtung Ausgangsstellung bewegt, so daß ein entsprechender Druckabfall in den zu den Radbremszylindern führenden Bremsleitungen erfolgt und ein Blockieren der Räder verhindert wird.

Der Fliehkraftsteller kann in an sich bekannter Weise so ausgebildet sein, daß er die Fliehkräfte in Zug-oder Druckkräfte umwandelt. Über Gelenkhebel werden dabei die Rotationskräfte in translatorische Kräfte umgewandelt. Am Fliehkraftsteller können auch Federelemente angreifen, die dien Fliehkraftsteller im Stillstand in eine definierte Endstellung bringen.

Der Hydraulikzylinder kann auch an einen Bremsleitungsabzweig angeschlossen sein um bei Betätigung mittels Fliehkraftsteller eine Bremsdruckerhöhung oder gegebenenfalls auch eine Bremsdruckreduzierung zu bewirken.

Die Verwendung eines Fliehkraftstellers hat gegenüber herkömmlichen Systemen den Vorteil einer hohen Verstellgeschwindigkeit bzw. Dynamik, da der Fliehkraftsteller stets in einer Drehrichtung arbeitet. Bei Motorausfall bietet das erfindungsgemäße Bremssystem die Sicherheit, daß die normale Bremswirkung nicht beeinträchtigt wird. Eine Überwachung der Ausgangslage ist bei diesem System ebenfalls nicht erforderlich, da die Rückstellung mittels einer Feder stets automatisch die Ausgangslage erreicht. Mit dem System ist auch die Realisierung einer gewünschten, nicht linearen Übergangsfunktion zwischen dem Normalbetrieb und dem Antriebsschlupfregel-Betrieb möglich.

## Zeichnung

Die Erfindung wird nachfolgend anhand der Zeichnungen näher erläutert. Es zeigen:

Figur 1 ein hydraulisches Bremssystem mit einem zusätzlichen Hydraulikzylinder, dessen Kolben schwimmend angeordnet ist, der über einen Zugkräfte erzeugenden Fliehkrafthersteller mechanisch verschiebbar ist.

Figur 2 einen der Figur 1 entsprechende Anordnung, die jedoch einen Druckkräfte erzeugenden Fliehkraftsteller verwendet,

Figur 3 ein Bremssystem, bei dem der zusätzliche Hydraulikzylinder an einen Abzweig der Bremsleitung angeschlossen ist,

Figur 3a und 3b Ausführungen von speziellen Ventilen für das in Figur 3 dargestellte Bremssystem,

Figur 4 und Figur 5 zwei Ausführungsbeispiele von Fliehkraftstellern,

Figur 6a, 6b und Figur 7 weitere Ausführungsbeispiele, bei denen dem Hauptbremszylinder jeweils ein Fliehkraftsteller zugeordnet ist.

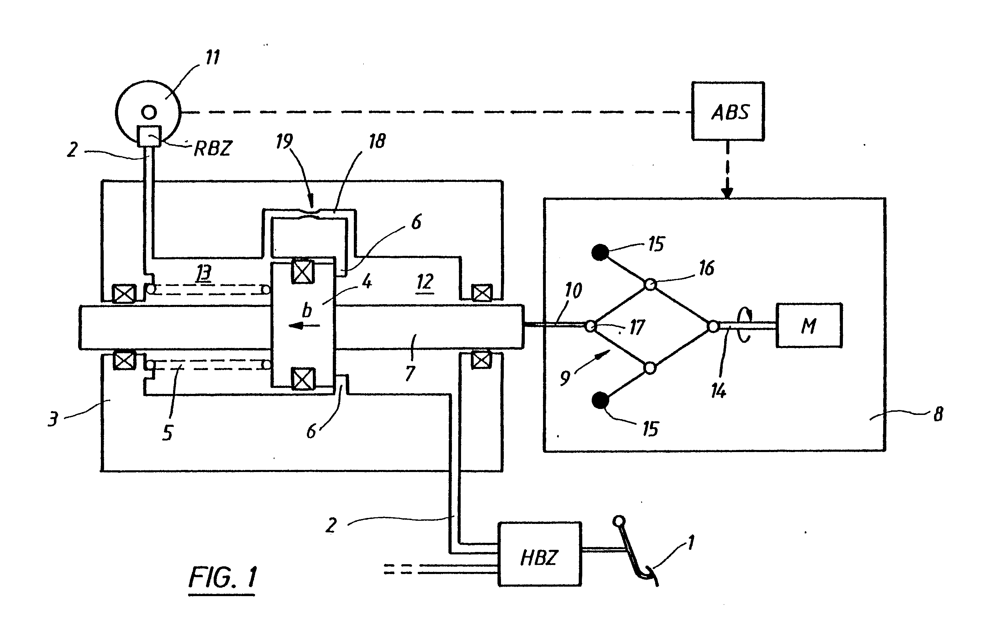

Das in Figur 1 dargestellte Bremssystem zeigt einen der Radbremszylinder RBZ und den Hauptbremszylinder HBZ, der von einem Fußpedal 1 betätigbar ist. In die vom Hauptbremszylinder HBZ zum Radbremszylinder RBZ führende Bremsleitung 2 ist ein zusätzlicher Hydraulikzylinder 3 eingefügt, der einen schwimmend gelagerten Kolben 4 besitzt. Der Kolben 4 wird mittels einer Druckfeder 5 in Ruhestellung gegen einen Anschlag 6 gedrückt. Über eine Kolbenstange 7 ist der Kolben 4 mit einer Stellvorrichtung 8 verbunden, die einen Fliehkraftsteller 9 besitzt, der von einem Elektromotor M betätigt wird. Zwischen Kolbenstange 7 und Fliehkraftsteller 9 ist eine Zugstange 10 zur Übertragung der vom Fliehkraftsteller erzeugten Zugkräfte vorgesehen.

Der Elektromotor M wird von einem Antiblockiersystem ABS gesteuert, welches in an sich bekannter Weise das Blockieren bzw. eine Blockierneigung an den Rädern 11 überwacht und gegebenenfalls feststellt. Wird durch Betätigung des Fußpedals 1 der Bremsdruck in der dem Hauptbremszylinder HBZ zugewandten Kammer 12 des Hydraulikzylinders 3 erhöht, so wird dadurch der Kolben 4 in Pfeilrichtung b verschoben, wodurch in der Kammer 13 ein entsprechender Bremsdruck erzeugt wird. Erreicht der Bremsdruck in der Kammer 13 einen Wert, der ein Blockieren eines der Räder 11 bewirkt, so wird der Elektromotor M vom Antiblockiersystem ABS in Gang gesetzt. Über die Motorwelle 14 wird dadurch der Fliehkraftsteller 9 in Rotation versetzt, so daß seine Fliehgewichte 15 nach außen wandern. Über Gelenke 16, 17 und über die Zugstange 10 wird somit der Kolben 4 entgegen der Pfeilrichtung b zurückgezogen, so daß eine Absenkung des Bresmdrucks in der Kammer 13 an den Radbremszylindern RBZ erfolgt. Ist der Bremsvorgang beendet, so führt die Feder 5 den Kolben 4 in die dargestellte Ruhestellung zurück.

Der zwischen den Kammern 12 und 13 wirksame Bypass 18 besitzt eine sehr starke Verjüngung 19 die nur einen Langzeit-Druckausgleich bzw. Volumenausgleich zwischen den Kammern 12 und 13 zuläßt. Für die Dauer eines Bremsvorganges ist dieser Bypass 18 zu vernachlässigen.

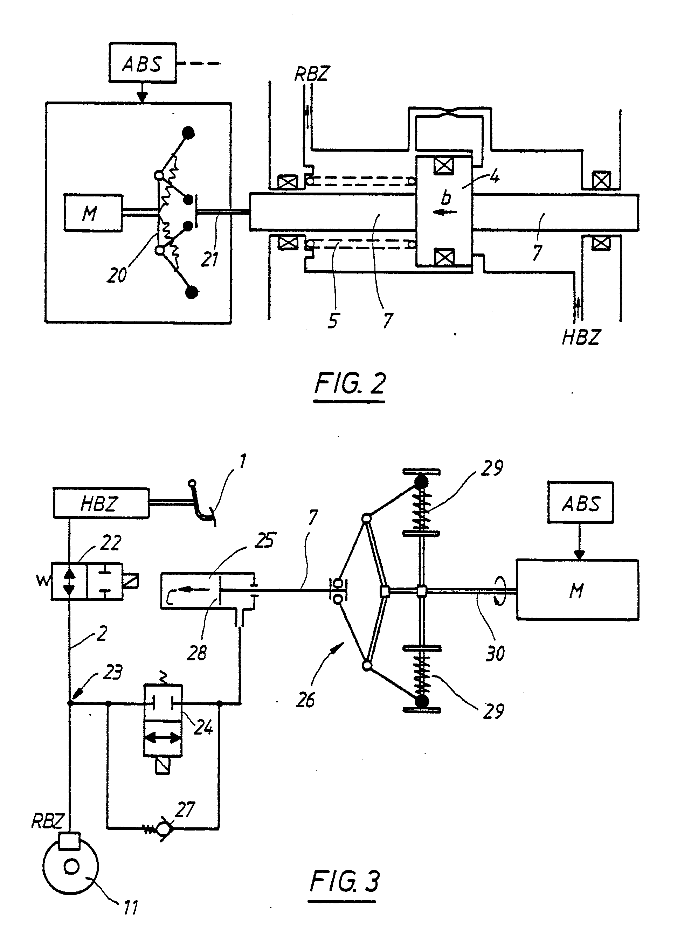

Bei der in Figur 2 dargestellten Ausführungsform eines Bremssystems ist anstelle eines eine Zugkraft erzeugenden Fliehkraftstellers ein Fliehkraftsteller 20, der bei Rotation Druck über eine Druckstange 21 auf die Kolbenstange 7 ausübt. Im übrigen ist die Funktion dieses Bremssystem mit dem in Figur 1 dargestellten Bremssystem identisch.

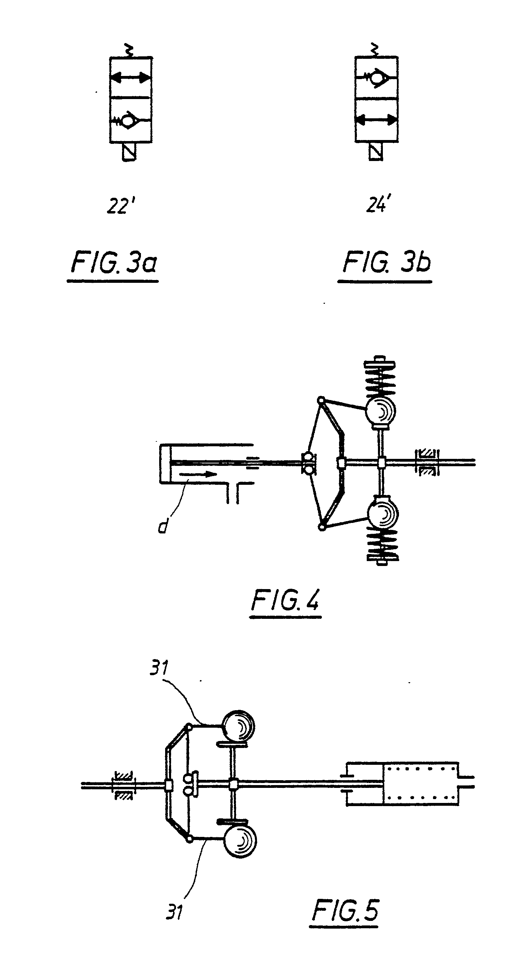

In Figur 3 ist ein weiteres Ausführungsbeispiel angegeben, bei dem der Hauptbremszylinder HBZ über ein elektromagnetisches erstes Absperrventil 22 mit den Radbremszylinder RBZ verbunden ist. An einem Abzweig 23 ist über ein zweites elektromagnetisches Absperrventil 24 ein zusätzlicher Hydraulikzylinder 25 angeschlossen dessen Kolben mittels eines Fliehkraftstellers 26 betätigbar ist. Der Fliehkraftsteller 26 ist von einem Elektromotor M angetrieben, welcher auch hier von einem Antiblockiersystem ABS gesteuert wird. Das zweite Absperrventil 24 ist mittels eines Rückschlagventils 27 überbrückt.

Wird der Hauptbremszylinder über das Fußpedal 1 betätigt, so erhöht sich der Druck in der Bremsleitung 2 solange, bis am Rad 11 eine Blockierneigung bzw. ein Blockieren von dem Antiblockiersystem ABS festgestellt wird. Daraufhin wird das Ventil 22 geschlossen und zur Bremsdruckreduzierung das Ventil 24 geöffnet. Der im Hydraulikzylinder 25 befindliche Kolben 28 wird nun vom Bremsdruck gegen die Federkraft der Federn 29 in Pfeilrichtung c bewegt, wodurch eine Bremsdruckreduzierung eintritt. Wird die Motorwelle 30 nun vom Elektromotor M in Rotation versetzt, so wandern die Fliehgewichte des Fliehkraftreglers aufgrund der Rotation nach außen und führen den Kolben 28 wieder zurück. Diese Rückführung kann auch bei geschlossenem Ventil erfolgen, da über das Rückschlagventil 27 bei nicht betätigten Hauptbremszylinder HBZ die Bremsflüssigkeit zurückgeführt werden kann.

In Figur 3a und Figur 3b sind zwei Ausführungen von 2/2-Wegeventilen 22' und 24' gezeigt, die anstelle der in Figur 3 verwendeten Ventile 22, 24 einsetzbar sind. Durch Verwendung dieser Ventile kann das Rückschlagventil 27 (Figur 3) eingespart werden.

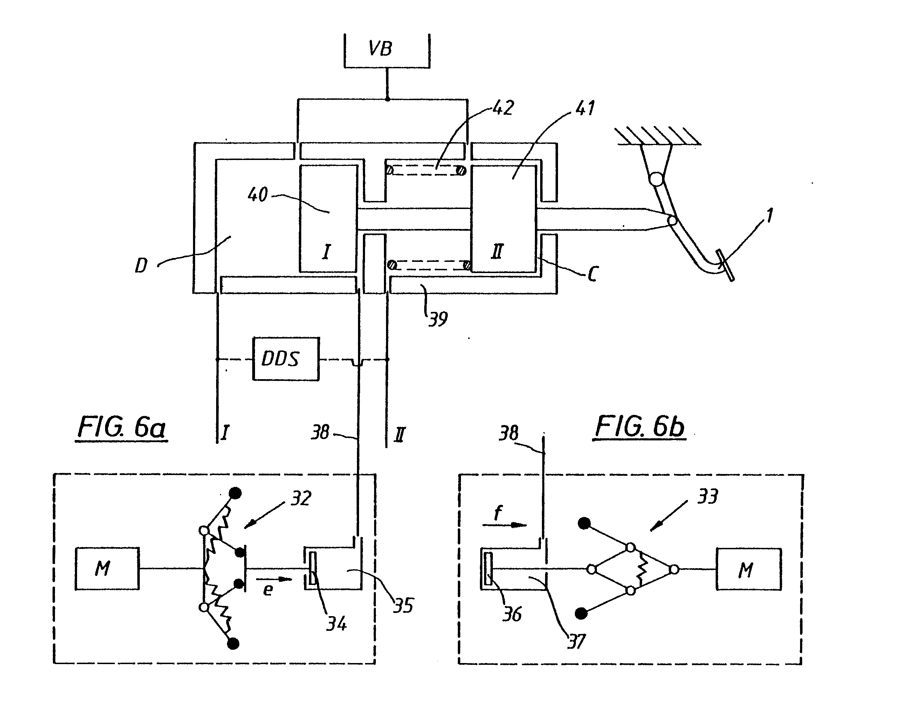

In Figur 4 ist eine weitere Variante eines Fliehkraft stellers angegeben, bei dem die Fliehgewichte gegen Federkräfte nach außen wandern können, wobei der im Zylinder befindliche Kolben in Pfeilrichtung b bewegt wird. Die Variante dient im Unterschied zu den im Figur 1 bis 3 dargestellten Ausführungsformen nicht zu einer primären Druckabsenkung, sondern zu einem Druckaufbau und stellt damit den Druckerzeuger eines Antriebsschlupfregelungssystems oder eines Bremskraftverstärkers dar.

Figur 5 zeigt eine Ausführung eines Fliehkraftstellers, bei dem über Gelenkwinkel 31 Druck auf den Kolben ausgeübt werden kann. Für diese Ausführungsform gilt analog das unter Figur 4 gesagte.

Bei dem in Figur 6a dargestellten hydraulischen Bremssystem wird ein Fliehkraftsteller 32 verwendet, der bei Rotation den zugehörigen Kolben 34 im Hydraulikzylinder 35 in Pfeilrichtung e verschiebt. Anstelle des Fliehkraftstellers 32 kann der in Figur 6a dargestellte Fliehkraftsteller 33 verwendet werden, der bei Rotation den mit ihm verbundenen Kolben 36 in Pfeilrichtung f bewegt. In beiden Fällen wird bei Rotation der Fliehkraftsteller ein Druckaufbau in den Hydraulikzylindern 36, 37 erzielt. Über Hydraulikleitungen 38 sind die Hydraulikzylinder 35, 37 mit dem Hauptbremszylinder 39 verbunden, der zwei starr gekoppelte Kolben 40, 41 enthält, die gegen eine Feder 42 mittels eines Pedals 1 betätigt werden können. Der dem Kolben 41 zugehörige Ringraum C steht ebenso wie der Ringraum D mit einem Hydraulik-Vorratsbehälter VB in Verbindung.

Ein Differenzdruckschlater DDS kann in an sich bekannter Weise einen Kreisausfall bei Überschreiten einer vorgegebenen Druckdifferenz zwischen den Ringräumen CD erkennen und ein Warnsignal auslösen und gegebenenfalls veranlassen, daß die Verstärkungswirkung begrenzt wird, um der Gefahr der Überbremsung oder der Drucküberlasung des intakten Kreises zu begegnen.

Mit den Fliehkraftstellern 32, 33 ist eine hochdynamische Bremsdruckmodulation möglich.

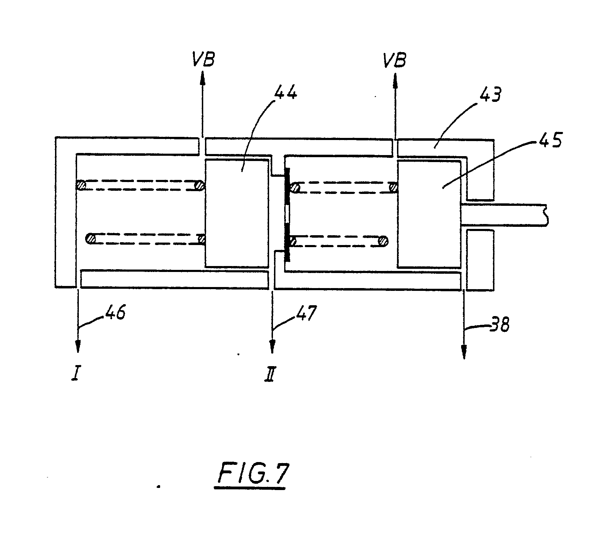

Ein weiteres in Figur 7 dargestelltes Ausführungsbeispiel zeigt einen Hauptbremszylinder 43, dessen Kolben 44 und 45 nicht starr gekoppelt sind. Es kann also ein handelsüblicher Hauptbremszylinder verwendet werden, der über eine Hydraulikleitung 38 mit Fliehkraftsteller 32, 33 verbunden sein kann, wie sie in Figur 6 dargestellt sind. Die Hydraulikleitungen 46, 47 führen zu den Bremskreisen I, II.

## Ansprüche

1. Hydraulisches Bremssystem mit einem zwischen Hauptbremszylinder und Radbremszylinder angeordneten, zur Bremsdruckmodulation dienenden Hydraulikzylinder, dessen Kolben über eine Kolbenstange mit einem elektromechanischen Stellmechanismus in Verbindung steht, dadurch gekennzeichnet, daß der Stellmechanismus ein von einem Elektromotor (M) angetriebener Fliehkraftsteller (9, 20, 26) ist, der Rotationskräfte in an der Kolbenstange (7) angreifende Zug-oder Druckkräfte umwandelt.

2. Bremssystem nach Anspruch 1, dadurch gekennzeichnet, daß der Kolben (4) schwimmend angeordnet ist und an einer seiner beiden Kolbenflächen von einer Druckfeder (5) beaufschlagt ist, die den Kolben (4) in eine definierte Ruhe-bzw. Ausgangsstellung bringt, und daß der Hydraulikzylinder (3) einerseits des Kolbens (4) mit dem Hauptbremszylinder (HBZ) des Bremssystems und andererseits des Kolbens (4) mit einer zu einem Radbremszylinder (RBZ) führenden Bremsleitung (2) verbunden ist.

3. Bremssystem nach einem der Ansprüche 1 oder 2, dadurch gekennzeichnet, daß bei einer Verwendung in einem Antiblockier-System der Fliehkraftsteller (9, 20, 26) den Kolben (4) bei festgestelltem Blockieren der Räder (11) in der Richtung verschiebt, daß der Druck in den zu den Radbremszylindern (RBZ) führenden Bremsleitungen (2) abfällt.

4. Bremssystem nach einem der Ansprüche 1 oder 2, dadurch gekennzeichnet, daß bei Verwendung in einem Antriebsschlupf-System oder bei Verwendung als Bremskraftverstärker der Fliehkraftsteller (9, 20, 26) den Kolben zum Abbremsen der Räder (11) in der Richtung verschiebt, daß sich der Druck in den zu den Radbremszylindern (RBZ) führenden Bremsleitungen (2) erhöht.

5. Bremsystem nach einem der vorhergehenden Ansprüche, dadurch gekennzeichnet, daß der Fliehkraftsteller über Gelenkhebel mit der Kolbenstange (7) in Verbindung stehende Fliehgewichte (15) hat, die mittels einer oder mehreren Federn im Stillstand in eine Endstellung gedrückt sind.

6. Bremssystem nach Anspruch 1, dadurch gekennzeichnet, daß die Bremsleitung (2) vom Hauptbremszylinder (HBZ) über ein erstes elektromagnetisches Absperrventil (22) zu wenigstens einem Radbremszylinder (RBZ) führt, daß zwischen diesem Absperrventil (22) und dem Radbremszylinder (RBZ) über ein zweites elektromagnetisches Absperrventil (24) die Bremsleitung (2) an einen von einem Fliehkraftsteller (26) betätigten Hydraulikzylinder (25) angeschlossen ist, und daß zur schnellen Bremsdruckreduzierung das erste Absperrventil (22) schließt und das zweite Absperrventil (24) öffnet und der Kolben (28) bei stillstehendem Elektromotor (M) gegen eine Federkraft zurückweicht.

7. Bremssystem nach einem der Ansprüche 1 oder 3 bis 5, dadurch gekennzeichnet, daß ein Hauptbremszylinder (42, 43) in zwei Ringräumen (C, D) angeordnete Kolben (41, 40; 45, 44) besitzt, die hydraulisch oder starr gekoppelt sind und mit einem einen Fliehkraftsteller (32; 33) enthaltenden Modulationssystem hydraulisch verbunden sind.

FIG. 1

0 279 940

*FIG. 2*

*FIG. 3*

22'

24'

**FIG. 3a**

**FIG. 3b**

d

**FIG. 4**

31

31

**FIG. 5**

VB

42
41
40
D
I
II
C
1
39

DDS

FIG. 6a

I
38
II

M
32
e
34
35

FIG. 6b

38

f
36
33
37
M

0 279 940

*FIG. 7*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | GB-A-1 252 674 (CAM GEARS) <br> * Figuren 1, 2 * <br> --- | 1,2 | B 60 T 8/48 |
| D,A | US-A-4 083 609 (COCHRAN) <br> * Figur 7 * <br> --- | 1,2 | |
| A | DE-B-1 287 459 (AUTOMOTIVE PRODUCTS) <br> --- | | |
| A | FR-A-2 133 466 (D'ESPINASSY DE VEÑEL) <br> ----- | | |

**RECHERCHIERTE SACHGEBIETE (Int. Cl.4)**

B 60 T 8/00

Der vorliegende Recherchenbericht wurde für alle Patentansprüche erstellt

| Recherchenort | Abschlußdatum der Recherche | Prüfer |
|---|---|---|
| BERLIN | 26-04-1988 | LUDWIG H J |